# EUROPÄISCHE PATENTANMELDUNG

(11) **EP 2 889 225 A1**
(43) Veröffentlichungstag der Anmeldung: **01.07.2015**
(21) Anmeldenummer: 13199517.7
(22) Anmeldetag: 24.12.2013
(51) Int. Cl.: B65B 29/02, B65B 7/28, B65D 85/804

(54) **Portionenkapsel zum Zubereiten eines Brüherzeugnisses**

(71) Anmelder: Luna Technology Systems LTS GmbH, 8304 Wallisellen (CH)
(72) Erfinder: Deuber, Louis, 8805 Richterswil (CH); Ternité, Rüdiger, 21149 Hamburg (DE); Lantz, Ingo, 22149 Hamburg (DE)
(74) Vertreter: Frei Patent Attorneys

(57) **Zusammenfassung**

Eine mit einem Extraktionsgut gefüllte Portionenkapsel (1) für die Herstellung eines Brüherzeugnisses, weist auf:
- Einen Grundkörper (2) mit einem Bodenbereich (5) und einer umlaufenden Seitenwand (6); und
- einen am Grundkörper (2) befestigten Deckel (3);
- wobei der Deckel (3) entlang eines umlaufenden Kragens (4) am Grundkörper befestigt ist, wobei der Kragen (4) zu einer Deckelseite hin an die umlaufende Seitenwand anschliesst;
- wobei der Grundkörper (2) im Bereich des Kragens einen im Wesentlichen rechteckigen Querschnitt hat;
- wobei der Deckel (3) eine Wölbung nach aussen bildet, so dass der Deckel zu einem Kapselvolumen beiträgt; und
- wobei der Kragen (4) eine Breite von mindestens 1.6 mm aufweist.

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere eine Kapsel mit einem Extraktionsgut sowie ein Zubereitungssystem.

Extraktionsgeräte zum Zubereiten von Getränken aus einem in einer Portionsverpackung vorhandenen Extraktionsgut sind beispielsweise als Kaffee- oder Espressomaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Brühflüssigkeit - im Allgemeinen heisses Wasser - eingeleitet. Auf der zweiten Seite wird das Brüherzeugnis aus der Kapsel ausgeleitet. Je nach zuzubereitendem Getränk und System muss dabei im Innern der Kapsel ein erheblicher Druck von beispielsweise 5-20 bar - für Filterkaffee bzw. "American Coffee" oder Tee auch weniger - herrschen.

Als Kapselmaterialien sind insbesondere Aluminium und Kunststoffe, bspw. Polypropylen bekannt geworden. Aluminiumkapseln bringen eine sehr gute Haltbarkeit (Aromaschutz) des Extraktionsguts, sind aber in der Herstellung sehr energieaufwändig. Polypropylenkapseln sind betreffend Energieaufwand und Entsorgung vorteilhaft, stellen aber erhöhte Anforderungen an den Anstechmechanismus und den Aromaschutz.

Aus der WO 2010/118543 ist eine Kaffee-Portionenkapsel aus Kunststoff bekannt, welche näherungsweise eine Würfelform aufweist und im Unterschied zu den bekannten becherförmigen Kapseln keinen auf der Ebene der einen (oberseitigen) Deckfläche umlaufenden Kragen aufweist. Ein solcher umlaufender Kragen wird bei Kapselsystemen gemäss dem Stand der Technik benötigt, erstens um die Kapsel beim Einwurf in das Extraktionsgerät zu führen und nach dem Einwurf in einer Zwischenposition zu halten. Zweitens ist der Kragen auf der Ebene der oberseitigen Deckfläche nötig, damit die Kapsel durch Einklemmen des Kragens zwischen entsprechende Dichtungselemente des Extraktionsgeräts beim Einleiten der Brühflüssigkeit abgedichtet werden kann, so dass die unter Druck stehende Brühflüssigkeit nicht an der Kapsel vorbei fliessen kann. Drittens wird ein solcher Kragen zum Verschliessen der Kapsel durch Ultraschallschweissen oder thermisches Versiegeln durch einen flachen Deckel (der auch als Folie ausgebildet sein kann) benötigt. Unabhängig von der Versiegelungsmethode erhält man mit einem breiteren Kragen eine zuverlässigere Abdichtung, da die Siegelfläche grösser ist. Dies gilt sowohl beim Verschliessen mittels Ultraschallschweissen, wo zudem ein Energierichtungsgeber auf dem Kragen der Kapsel untergebracht werden muss, als auch beim thermischen Versiegeln.

Im Gegensatz dazu wird gemäss WO 2010/118543 ein gewölbter Deckel anstelle der üblichen Deckelfolien oder Membranen verwendet, und das Verschliessen erfolgt bspw. mittels Ultraschall-Trennschweissen. Die gemäss der Lehre der WO 2010/118543 hergestellte Kapsel hat demnach unabhängig von ihrer ("Würfel"-)Form eine zwischen den durch die Deckfläche definierten Ebenen umlaufende, einen nur minimalen Kragen bildende Schweissbraue.

Die Kapsel gemäss WO 2010/118543 weist wichtige Vorteile auf, die in dieser Schrift auch beschrieben sind. Es ist jedoch eine technische Herausforderung, die in WO 2010/118543 beschriebene Kapsel in einer Brüheinheit eines Extraktionsgerätes zu handhaben, und die Abdichtung sicherzustellen. Die im Wesentlichen würfelförmige Kunststoffkapsel bläht sich bei den hohen Temperaturen und Drücken, die während des Brühvorgangs herrschen, auf und verändert ihre Form, was ein für die Abdichtung durchaus gewünschter Effekt ist, wie unten weiter erläutert wird. Allerdings hat sich herausgestellt, dass sie bei hohen Innendrücken und durch die Hitze ausreichend weichem Material dazu tendiert, sich einer Kugelform anzunähern, was dann unter anderem die Abdichtung beeinträchtigt, und schlimmstenfalls auch zu einem Verklemmen der Kapsel in der Brüheinheit führen kann.

Der vorliegenden Erfindung stellt sich demnach die Aufgabe, Kapseln der in WO 2010/118543 beschriebenen Art weiterzuentwickeln, um die Abdichtung der Kapsel in der Brüheinheit und weitere Funktionalitäten zu verbessern.

Gemäss einem Aspekt der Erfindung wird eine Kapsel aus Kunststoff mit einem Extraktionsgut zur Verfügung gestellt, welche Kapsel aufweist:
- Einen Grundkörper mit einem Bodenbereich und einer umlaufenden Seitenwand; und
- einen am Grundkörper befestigten Deckel;
- wobei der Deckel entlang eines umlaufenden Kragens am Grundkörper befestigt ist, wobei der Kragen zu einer Deckelseite hin an die umlaufende Seitenwand anschliesst;
- wobei der Grundkörper im Bereich des Kragens einen im Wesentlichen rechteckigen Querschnitt hat;
- wobei der Deckel eine Wölbung nach aussen bildet, so dass der Deckel zu einem Kapselvolumen beiträgt;
- und wobei der Kragen eine Breite von mindestens 1.6 mm aufweist.

Die Breite des Kragens kann insbesondere zwischen 1.6 mm und 4 mm betragen.

Es hat sich gezeigt, dass eine solche Kapsel den eingangs gestellten Anforderungen sehr gut entspricht. Insbesondere die Probleme beim Abdichten konnten durch den breiteren Kragen gelöst werden. Zwar sind Kapseln mit umlaufenden Krägen von einer Breite von deutlich über 1.6mm bereits von auf dem Markt erhältlichen Kapselsystemen bekannt. Bei diesen Systemen handelt es sich jedoch um Kapseln mit kreisrundem oder zumindest annähernd rundem Querschnitt, welche von einer flachen Deckelmembran verschlossen sind, wie bereits eingangs beschrieben wurde. Bei diesen Kapselsystemen wird eine extraktionsseitige Abdichtung typischerweise durch Dichtungselemente in der Brühkammer erzielt, die auf dem Kapselkragen aufliegen. Ebenfalls bekannt ist eine Abdichtung an dem Kapselkragen durch Dichtungselemente, die in den Kragen integriert sind. Beispielsweise ist eine Abdichtung durch ein gummielastisches Dichtungselement am Kragen der Kapsel in der EP1654966A1 beschrieben. Eine solche Dichtungsfunktion übernimmt der Kragen bei der erfindungsgemässen Kapsel nicht, die extraktionsseitige Abdichtung findet vielmehr an dem gewölbten Deckel statt. Aufgrund des Innendrucks und der hohen Temperatur während des Brühvorgangs verformt sich die Kapsel nämlich derart, dass die Wölbung des Kapseldeckels, insbesondere in den gekrümmten Aussenbereichen, flächig gegen eine entsprechend geformte, gekrümmte, und nicht notwendigerweise elastische Dichtfläche des Brühmoduls gedrückt wird. Wenn die Kapsel sich zu stark in Richtung einer Kugel verformt, liegt der gewölbte Deckel in seinen Aussenbereichen jedoch nicht mehr formangepasst an den entsprechenden Dichtflächen des Brühmoduls an, und eine zuverlässige Abdichtung ist nicht mehr gewährleistet. Dieser Effekt kann durch den breiteren Kragen gemäss der Erfindung vermieden, werden, da dieser die Kapsel derart versteift, dass sie ihren quadratischen oder rechteckigen Querschnitt beibehält, so dass eine zuverlässige Abdichtung über den gewölbten Deckel erfolgt, der sich an Dichtflächen innerhalb der Brüheinheit anlegt. Dabei ist entscheidend, dass der Kragen, sich nicht etwa in einer Ebene mit der Kapseloberfläche befindet, sondern unterhalb der Deckelwölbung liegt, im Bereich derer die Abdichtung bewirkt wird.

In der noch nicht veröffentlichten europäischen Patentanmeldung 13 186 920.8 der Luna Technology Systems LTS GmbH wird ein Brühmodul mit einem Kopf mit seitlichen Führungsmitteln vorgeschlagen, welche den Kragen einer Kapsel der in WO 2010/118543 gelehrten Art beim Einwurf in das Brühmodul führen, und aus welchen der Kragen durch Rückholmittel herausschiebbar ist, ohne dass diese seitlichen Führungsmittel in seitliche Richtungen bewegbar sein müssen. Diese Art der Führung im Zusammenspiel mit Rückholmitteln funktioniert insbesondere vorteilhaft dank der im Bereich des Kragens rechteckigen Form der Kapsel, dank welcher der Kragen entlang einer ausgedehnten Strecke seitlich geführt wird. Durch diese rechteckige Form und die Möglichkeit der Führung entlang einer ausgedehnten Strecke kann nämlich ein Führungsmittel bspw. an zwei voneinander beabstandeten Stellen entlang des Kragens die Kapsel halten, und ein Rückholmittel kann mittig zwischen diesen Stellen angreifen, was bei einer rotationssymmetrischen Kapsel nicht möglich ist. Dies ermöglicht bspw. auch, dass im Unterschied zu Lösungen des Standes der Technik die Rückholmittel auch während des Brühprozesses mit der Kapsel im Eingriff stehen und kein Mechanismus nötig ist, diese nach dem Brühprozess mit der Kapsel in Eingriff zu bringen. Auch andere Arten eines Zusammenspiels zwischen Führung und Rückholmitteln werden durch die rechteckige Form der Kapsel zusammen mit einem Kragen der beanspruchten Art ermöglicht.

Insbesondere in einem Brühmodul der in der europäischen Patentanmeldung 13 186 920.8 vorgeschlagenen Art kann daher der über 1.6mm breite Kragen die Führung der Kapsel während des Einwurfs, während des Brühprozesses und während des Auswurfs erleichtern. Es wirken also die drei Merkmale "rechteckige Grundform", "Wölbung des Deckels" und "Kragen mit Mindestbreite" geradezu ideal zusammen, indem sowohl die Führung während des Einwurfs und während des Brühprozesses und des Auswurfs als auch die Dichtung gegen das Brühmodul befriedigend lösbar sind, ohne wesentliche Vorteile einer Kapsel wie in WO 2010/118543 gezeigt (bspw. Stapelbarkeit, dichte Packbarkeit etc.) aufzugeben und obwohl der Kapselkragen selbst in der vorgegebenen Anordnung wie vorstehend erläutert weniger gut geeignet wäre, um die Kapsel auf konventionelle Art durch Klemmen zwischen elastischen Dichtungsmitteln von gegeneinander verschiebbaren Brühmodulteilen abzudichten.

Um die Abdichtung zu verbessern, ist die Kapsel in einer Ausführungsform so ausgebildet, dass unter einem Überdruck von 1 bar bei 95°C (einer typischen Temperatur der Brühflüssigkeit) der Durchmesser in der Mitte zwischen Boden und Kapselkragen um mindestens 1 mm, insbesondere um mindestens 2 mm zunimmt. In der Praxis können während des Brühvorgangs noch höhere Drücke und höhere Temperaturen, beispielsweise über 110° C herrschen, und die Volumenzuname der Kapsel kann daher auch deutlich über den hier beanspruchten Werten liegen. Dies gilt für den Zustand ohne umgreifende Dichtung; eine solche kann ein solches Aufblähen je nach Dimensionierung verhindern. Dadurch kann eine zuverlässige Abdichtung auch dann erreicht werden, wenn der Durchmesser der Kapsel in einer Ebene parallel zu dem umlaufenden Kragen geringer ist als die Innenabmessungen der Brühkammer. Insbesondere können Fertigungstoleranzen ausgeglichen werden.

Die Form der Kapsel ist wie erwähnt so, dass der Grundkörper im Bereich des Kragens im Querschnitt im Wesentlichen rechteckig, bspw. im Wesentlichen quadratisch ist. Auch der Kragen selbst - bspw. dessen Aussenkante - kann im Wesentlichen rechteckig, insbesondere quadratisch sein. ,Im Wesentlichen rechteckig' bzw. ,im Wesentlichen quadratisch' schliesst insbesondere abgerundete Ecken nicht aus.

Die Kapsel kann als Ganze - bis auf den Kragen und einen eventuellen Versatz der Deckelwölbung, siehe unten - die Form eines Würfels oder Quaders, insbesondere eines Würfels haben. In Ausführungsformen kann der Kragen seitlich maximal 4 mm, insbesondere maximal 3 mm, maximal 2.5 mm oder bspw. maximal 2.2 mm hervorstehen. Insbesondere ein Vorstehen von 1.6 mm bis 2.2 mm ist dabei bevorzugt, da man festgestellt hat, dass hier ein optimaler Kompromiss zwischen den Vorteilen eines möglichst schmalen Kragens (Stapelbarkeit der Kapsel, Kompaktheit der Kapsel und damit auch der Brüheinheit, elegantes Erscheinungsbild), und den Vorteilen eines breiteren Kragens (besseres Abdichten in der Brüheinheit durch den Versteifungseffekt, einfachere und bessere Versiegelung am Kragen durch die breitere Siegelfläche, einfacheres Handling der Kapsel bei Angreifen am Kragen und / oder Führung des Kragens in einer Nut) erzielt wird. Die Würfelform schliesst eine - bspw. bei tiefgezogenen oder im Spritzgussverfahren hergestellten Kapseln herstellungsbedingte - Neigung der umlaufenden Seitenflächen zur Achse (Senkrechten auf die Boden- und/oder Deckelfläche) von bspw. maximal 3°, insbesondere maximal 2° oder maximal 1.5° nicht aus.

Bei einer Ausführung im Wesentlichen in Würfelform beträgt die äussere Länge der Würfelkanten beispielsweise zwischen 24 und 30 mm für eine Füllmenge von zwischen ca. 6 g und ca. 10 g Kaffee. Für grössere Füllmengen sind auch grössere Abmessungen, bspw. von bis zu 35 mm, nicht ausgeschlossen.

Der Grundkörper bildet mit Bodenbereich und umlaufender Seitenwand eine Art Becher, der durch den Deckel verschlossen wird. Dabei ist der Bodenbereich vorzugsweise flach; das ist jedoch keine Notwendigkeit.

Die Form des Deckels kann von aussen nach innen den Deckel-Kragen, einen gekrümmten Übergangsbereich und einen mittigen flachen Bereich aufweisen, der die eigentliche oberseitige Deckfläche bildet. Ein solcher flacher Bereich ist aufgrund des Übergangsbereichs, der die Wölbung bewirkt, von der Ebene des Deckel-Kragens nach aussen abgesetzt. Der Übergangsbereich kann bspw. S-förmig gekrümmt sein oder stetig von einer in einem Winkel zur Kragenebene stehenden äusseren Partie hin zum mittigen flachen Bereich gekrümmt verlaufen. Dabei ist die Dimensionierung beispielsweise so gewählt, dass der mittige flache Bereich optisch dominiert, indem er bspw. gleich gross wie oder nur unwesentlich (bspw. maximal 10%) kleiner als die Bodenfläche ist. Es kann insbesondere bei einer Ausführung der Kapsel als insgesamt quader- oder würfelförmig vorgesehen sein, dass dieser flache Bereich mehr als 60% des Durchmessers und entsprechend mindestens 40% der Fläche, einnimmt. Dieser mittige flache Bereich erleichtert das Anstechen und damit die Extraktion.

Der Deckel-Kragen wird im Allgemeinen eine umlaufende, zur Deckelseite hin gewandte Fläche bilden, die sich von einer Aussenkante des Kragens bis zu einem Ansatz der Wölbung erstreckt. Es kann in Ausführungsformen vorgesehen sein, dass der Ansatz der Wölbung im Vergleich zu der Partie der Seitenwand, an welche der Kragen anschliesst, nach innen versetzt ist. Ein solcher Versatz kann bspw. mindestens 0.2 mm betragen.

Sowohl der Grundkörper als auch der Deckel sind bspw. aus Kunststoff gefertigt. Es kann insbesondere vorgesehen sein, dass Grundkörper und Deckel aus demselben Kunststoff bestehen. Als Beispiel für ein Material sei Polypropylen genannt, wobei eine Sperrschicht eingearbeitet sein kann, die eine Barriereneigenschaft für Sauerstoff hat und eine Diffusion von Sauerstoff in die Kapsel verhindert. Eine solche Sperrschicht weist bspw. ein Ethylen-Vinylalkohol-Copolymer (EVOH) auf. Die Wandstärke im Bereich des Grundkörpers liegt insbesondere zwischen 0.1 mm und 0.7 mm, vorzugsweise zwischen 0.2 mm und 0.4 mm, bspw. zwischen 0.25 mm und 0.35 mm. Dasselbe kann auch für die Wandstärke des Deckels gelten. In einer bevorzugten Ausführungsform entspricht die Wandstärke des Deckels ungefähr der Wandstärke des Grundkörpers.

Anstelle von Polypropylen kommen auch andere Kunststoffe in Frage. Auch die Anwendung der Erfindung auf Nicht-Kunststoffe ist nicht ausgeschlossen.

Der Grundkörper kann im Tiefziehverfahren hergestellt sein. Alternativ kommt auch die Herstellung durch Spritzgiessen in Frage. Dasselbe gilt für den Deckel, wobei aufgrund dessen beschränkter Tiefe das Tiefziehverfahren auch als Prägeverfahren aufgefasst werden kann. Kombinationen mit spritzgegossenem Grundkörper und tiefgezogenem Deckel und umgekehrt sind möglich.

Die Befestigung des Deckels am Grundkörper kann gemäss einer ersten Ausführung durch Ultraschallschweissen geschehen. Gemäss einer ersten Möglichkeit wird das Ultraschalltrennschweissverfahren verwendet, bei welchem durch die Wirkung des Ultraschalls auch ein eventueller überstehender Rand des Deckels und des Grundkörpers abgetrennt wird. Gemäss einer zweiten Möglichkeit erfolgt das Abtrennen in einem separaten Bearbeitungsschritt, bspw. durch Stanzen oder durch Ultraschalltrennen in einer separaten Station.

In einer Ausfülwungsform - das ist eine Option für beide Möglichkeiten - ist ein Energierichtungsgeber für das Ultraschallschweissverfahren am Deckel und nicht am Grundkörper vorhanden. Dies erweist sich als besonders vorteilhaft für die Verbindung zwischen Grundkörper und Deckel.

In einer zweiten Ausführung erfolgt das Befestigen des Deckels am Grundkörper mittels Wänneübertrag von einem geheizten Werkzeug. In einer dritten Ausführung erfolgt das Befestigen mittels Laserschweissen. In einer vierten Ausführung geschieht das durch Kleben. Auch hier kann anschliessend der Rand mit unterschiedlichen Methoden (Stanzen, Ultraschalltrennen, etc.) abgetrennt werden.

Auch Kombinationen, bspw. mit Anschmelzen eines Klebers durch Ultraschall und/oder Wärme (also eigentlich ein Lötverfahren) oder mit der Verwendung einer geheizten Sonotrode in einem kombiniert thermisch/Ultraschallverfahren etc. sind möglich.

Ein System zur Zubereitung eines Brüherzeugnisses weist nebst einer Kapsel der geschilderten Art auch eine Maschine (Extraktionsgerät) zum Zubereiten des Brüherzeugnisses mit Hilfe einer solchen Kapsel auf. Die Maschine weist wie an sich bekannt ein Brühmodul auf, durch welches eine Brühkammer gebildet werden kann, in der sich während des Brühprozesses die Kapsel befindet. Das Brühmodul weist einen Injektor zum Einleiten der Brühflüssigkeit - im Allgemeinen unter Druck - und eine Ausleitvorrichtung zum Ausleiten derselben auf. Der Injektor und/oder die Ausleitvorrichtung können bspw. in an sich bekannter Art Perforationselemente zum Anstechen der Kapsel aufweisen.

Weiter ist die Ausleitvorrichtung mit einer auf die Wölbung abgestimmten Dichtfläche versehen, gegen welche der Deckel der in die Brühkammer eingelegten Kapsel unter einem Druck der Brühflüssigkeit gedrückt wird. Eine solche Dichtfläche wird mindestens teilweise gekrümmt sein, wobei die Krümmung auf die entsprechende Krümmung des Deckels abgestimmt ist, bspw. im Bereich zwischen dem Kragen einerseits und einer im Wesentlichen flachen Deckfläche (in welcher ggf. die Kapsel extraktionsseitig angestochen werden kann) andererseits.

Das Brühmodul weist ferner seitliche Führungsmittel zum Führen des Kragens während des Einwurfs der Kapsel in das Brühmodul auf; diese Führungsmittel halten die Kapsel nach deren Einwurf und vor dem Verschliessen der Brühkammer.

Das Brühmodul kann so ausgestaltet sein, dass durch eine Einwurföffnung und die Führungsmittel die Kapsel so positioniert wird, dass der Deckel der eingelegten Kapsel auf Seite der Ausleitvorrichtung liegt. Dadurch wirkt die Dichtfläche mit dem Kapseldeckel zusammen, und eine eventuelle Blähbarkeit der vorstehend diskutierten Art kann die Dichtwirkung einer injektionsseitigen Dichtung - welche ein Teil des Injektors bilden kann - verstärken.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Fig. 1 eine Kapsel in Seitenansicht;
- Fig. 2 die Kapsel gemäss Fig. 1 in einer alternativen Ansicht;
- Fig. 3 eine Schnittdarstellung der Kapsel im Bereich des Kragens;
- Fig. 4 ein Brühmodul;
- Fig. 5 eine Ansicht der Ausleitvorrichtung des Brühmoduls;
- Fig. 6 eine Schnittdarstellung des Brühmoduls;
- Fig. 7 eine alternative Kapsel; und
- Fig. 8 eine Schnittdarstellung der Kapsel gemäss Fig. 7.

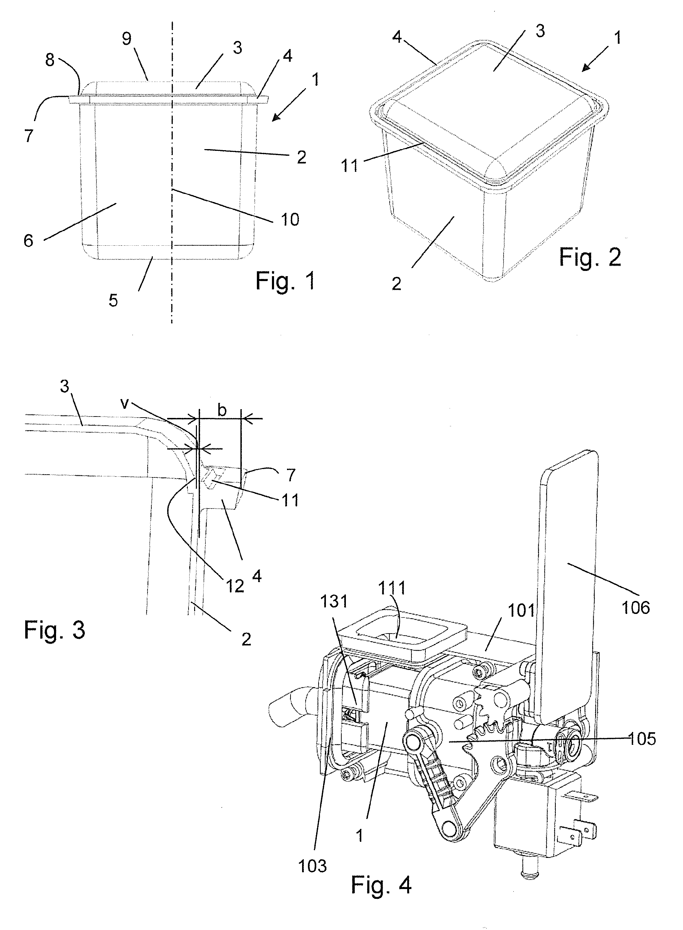

Die mit einem Extraktionsgut - insbesondere gemahlenem Kaffee - gefüllte Kapsel 1 gemäss **Figuren 1 und 2** hat im Wesentlichen die Form eines Würfels mit gerundeten Kanten. Die Ausdehnung nimmt jedoch zur oben liegenden Seite hin leicht zu, so dass die Kapsel streng mathematisch gesehen eine Pyramidenstumpfform hat. Der Neigungswinkel der in der Figur seitlichen Flächen gegenüber der Senkrechten zur Grundfläche 5 - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten.

Die Kapsel weist einen Grundkörper (oder Becher) 2 und einen entlang eines umlaufenden Kragens 4 daran befestigten Deckel 3 auf. Der Grundkörper bildet einen Kapselboden 5 und eine umlaufende Seitenwand 6, welche an ihrem in Bezug auf axiale Richtungen (Achse 10) äusseren, in der Figur oberen, Ende durch den Kragen 4 abgeschlossen wird. Der Deckel ist nach aussen gewölbt, indem die zum Kapselboden 5 im Wesentlichen parallele Deckelfläche 9 im Vergleich zum umlaufenden Kragen 4 nach aussen versetzt ist. Im Übergangsbereich zwischen dem Kragen 4 und der Deckfläche 9 ist die Kapsel gekrümmt, wobei sie hier stetig von einer in einem (fast rechten) Winkel zur Kragenebene stehenden äusseren Partie hin zum mittigen flachen Bereich gekrümmt, d.h. primär konvex gekrümmt ist.

Der umlaufende Kragen bildet eine zu Deckelseite hin gewandte Fläche 8, die sich von der Aussekante 7 des Kragens bis zum Ansatz 12 der Wölbung erstreckt. **Figur 3** zeigt einen vergrösserten Ausschnitt der Kapsel in einer Schnittdarstellung. Die Breite b des Kragens 4 ist der Abstand der äussersten Kante 7 des Kragens von der Aussenseite des Grundkörpers 2.

In der Ausführungsform gemäss Figuren 1-3 ist der Ansatz 12 gegenüber der vom Grundkörper 2 gebildeten umlaufenden Seitenwand nach innen versetzt. Der Versatz v wird wie in Fig. 3 illustriert gemessen zwischen
- einerseits der Aussenfläche des Grundkörpers im Bereich des Kragens 4
- und andererseits der dazu parallelen Ebene, die durch den Ort maximaler konkaver Krümmung im Übergang zwischen der Fläche 8 und der Wölbung des Deckels geht.

Die Figuren 2 und 3 zeigen im Bereich des umlaufenden Kragens 4 in der Fläche 8 eine Nut 11. Eine solche kann vorhanden sein, wenn der Deckel durch Tiefziehen (bzw. Prägen) hergestellt ist und für das Verschweissen des Deckels 3 mit dem Grundkörper 2 ein Energierichtungsgeber 23 am Deckel vorhanden ist. In anderen Ausführungsformen - bspw. wenn der Energierichtungsgeber nicht am Deckel vorhanden ist oder wenn der Deckel zwar einen Energierichtungsgeber aufweist, aber durch Spritzgiessen hergestellt ist - ist eine solche Nut nicht vorhanden.

Das Brühmodul gemäss **Figur 4** weist ein Brühmodulgehäuse 101 und durch das Gehäuse gehalten bzw. geführt eine Ausleitvorrichtung 103 als erstes Brühmodulteil und einen Injektor 105 als zweites Brühmodulteil auf. Durch einen Bedienhebel 106 ist der Injektor 105 zwischen einer Offenstellung, in welcher die Brühkammer offen und der Bedienhebel oben ist und einer Schliessstellung, in welcher die Brühkammer geschlossen und der Bedienhebel nach unten geklappt ist, relativ zum Gehäuse und zum ersten Brühmodulteil bewegbar. Figur 4 zeigt das Brühmodul in der Offenstellung und mit eingeworfener Kapsel 1. Für den Einwurf der Kapsel 1 ist eine Einwurföffnung 111 vorhanden, welche auch die Orientierung der Kapsel beim Einwurf vorgibt. Die Einwurföffnung 111 zeigt durch Andeuten der Position des Kragens 4 auch die zu wählende Orientierung der Kapsel 1 an.

An der Ausleitvorrichtung sind seitliche Führungsmittel 131 - als Führungs-Backen ausgeformt - vorhanden, welche den Kragen 4 der Kapsel beim Einwerfen führen und die Kapsel in der gewünschten Position halten, wenn das Brühmodul verschlossen wird.

Bezüglich Funktionsweise des Brühmoduls wird auch auf die bereits erwähnte europäische Patentanmeldung 13 186 920.8, insbesondere deren detaillierte Erläuterungen zur Funktionsweise der seitlichen Führungsmittel und der dort beschriebenen Rückholelemente, verwiesen. Ein für die Führung beim Einwerfen, das Halten in der Einwurfposition und das Auswerfen der Kapsel nach dem Brühprozess mit Hilfe der genannten Rückholelemente verwendetes Merkmal der Kapsel ist die rechteckige Grundform im Bereich des Kragens 4, welche eine seitliche Führung entlang einer ausgedehnten Strecke entlang der Kapsel sowie in Ausführungsformen auch ein Eingreifen der Rückholelemente an einer Position entlang dieser Strecke ermöglicht.

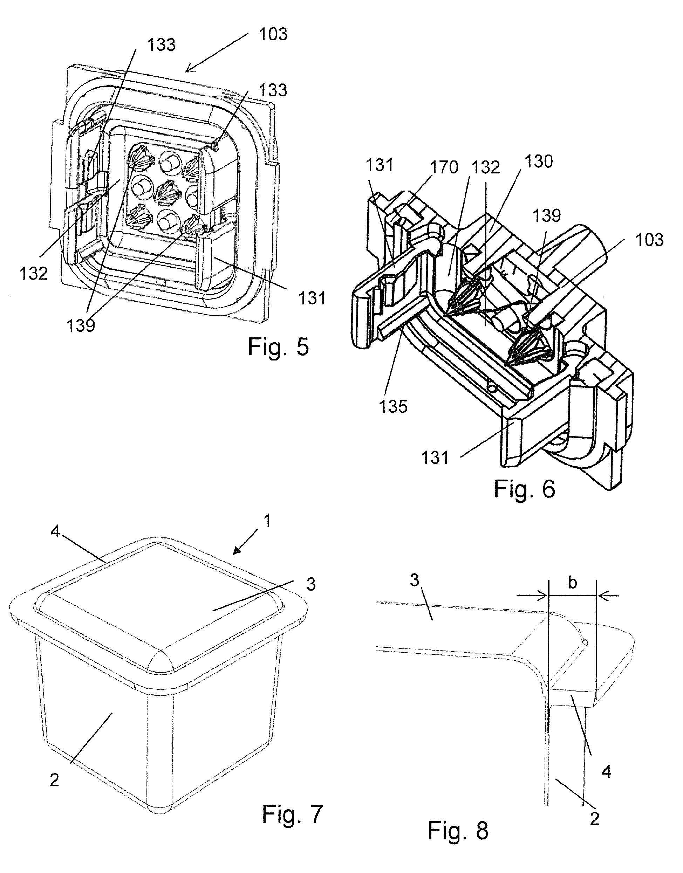

**Figuren 5 und 6** zeigen die Ausleitvorrichtung 103. Beim Verschliessen der durch das Brühmodul gebildeten Brühkammer (durch Verschieben des Injektors 105 zur Ausleitvorrichtung 103 hin bei eingeworfener Kapsel 1) und/oder während des Brühprozesses wird der Deckel 3 durch extraktionsseitige Perforationsdornen 139 angestochen, so dass das Extraktionsprodukt aus der Kapsel durch dafür vorgesehene Kanäle abfliessen kann. Die Funktionsweise der hier gezeichneten Extraktionsdorne ist in der europäischen Patentanmeldung 13 185 359.0 beschrieben; die hier beschriebene Erfindung hängt jedoch nicht von dieser Funktionsweise ab und ist auch mit anderen Extraktionsvorrichtungen verwendbar.

Ein Abdichten der Kapsel 1 gegen die Ausleitvorrichtung funktioniert hier ohne separate extraktionsseitige Dichtung. Ein solches Abdichten ist nötig, damit das aus der Kapsel austretende Brühgetränk in den Ausgiesser gelangt und nicht an der Kapsel 1 vorbei nach unten tropfen kann. Zu diesem Zweck ist extraktionsseitig eine auf die Wölbung des Kapseldeckels 3 abgestimmte, daher mindestens teilweise konkave Dichtfläche 132 vorhanden, gegen welche die Kapsel während des Extraktionsprozesses flächig gedrückt wird. Dabei kann diese Dichtfläche aus einem harten Material - bspw. spritzgegossenem Hartkunststoff oder Metall - gefertigt sein, wobei es die Kapselwand ist, welche während des Brühprozesses verformbarer ist und dichtend gegen die Dichtfläche 132 gedrückt wird. Die Wölbung des Kapseldeckels und damit verbunden die hier konkave Krümmung der Dichtfläche 132 leisten zu dieser Dichtwirkung einen wichtigen Beitrag.

In Figur 6 sieht man auch eine Verschlussdichtung 170, welche hier als Lippendichtung ausgestaltet ist. Diese liegt im geschlossenen Zustand der Brühkammer an Gehäuse des Injektors 105 an und wird bei Beaufschlagung mit Druck gegen diese gepresst. Dies dichtet die Brühkammer ab und verhindert den Wasseraustritt auch dann, wenn - bspw. für einen Spülvorgang - keine Kapsel eingelegt ist. Für das Abdichten der Kapsel gegen die Brühkammer und damit bei der Kontrolle des Extraktionsprodukt-Flusses hat diese Verschlussdichtung 170 jedoch keine Bedeutung.

Figuren 7 und 8 zeigen noch eine Variante der Kapsel. In dieser Variante unterscheidet sich die Kapsel in zwei voneinander unabhängigen, auch je einzeln realisierbaren Merkmalen von der Kapsel gemäss Figuren 1-3.

Erstens ist der Deckel 3 der Kapsel gemäss Figuren 7 und 8 nicht durch Tiefziehen bzw. Prägen sondern durch Spritzgiessen hergestellt. Daher bildet sich aussenseitig des Energierichtungsgebers nicht notwendigerweise eine Nut 11 aus.

Zweitens weist der Kapselkragen 4 eine noch grössere Breite b auf. Bei einem Kapseldurchmesser von ungefähr 27 mm beträgt diese ca. 4 mm. Es hat sich gezeigt, dass die Steifigkeitseigenschaften des Kragens bei einer Breite b von zwischen 1.6 mm und 4 mm, für einige Anwendungen insbesondere zwischen 1.6 mm und 3 mm, besonders günstig sind um die nötigen Führungs- Dichtungs- und Deformationseigenschaften aufzuweisen..

Auch andere Kapselformen sind denkbar. So ist bspw. nicht ausgeschlossen, dass der Grundkörper abweichend von den dargestellten Ausführungsformen stärker konisch zuläuft und also die Kapsel als Ganze nicht im Wesentlichen würfelförmig, sondern eher pyramidenstumpfförmig wirkt. Auch Übergänge zu stärker gerundeten Formen zum Boden hin oder gestufte Formen sind denkbar.

## Patentansprüche

1. Mit einem Extraktionsgut gefüllte Poitionenkapsel (1) aus Kunststoff für die Herstellung eines Brüherzeugnisses, aufweisend
- einen Grundkörper (2) mit einem Bodenbereich (5) und einer umlaufenden Seitenwand (6); und
- einen am Grundkörper (2) befestigten Deckel (3);
- wobei der Deckel (3) entlang eines umlaufenden Kragens (4) am Grundkörper befestigt ist, wobei der Kragen (4) zu einer Deckelseite hin an die umlaufende Seitenwand anschliesst;
- wobei der Grundkörper (2) im Bereich des Kragens einen im Wesentlichen rechteckigen Querschnitt hat;
- wobei der Deckel (3) eine Wölbung nach aussen bildet, so dass der Deckel zu einem Kapselvolumen beiträgt;
- **dadurch gekennzeichnet, dass** der Kragen (4) eine Breite (b) von mindestens 1.6 mm aufweist.

2. Kapsel nach Anspruch 1, wobei der Kragen (4) eine Breite (b) von zwischen 1.6 mm und 3 mm, vorzugsweise zwischen 1.6 mm und 2.2 mm, aufweist.

3. Kapsel nach Anspruch 1 oder 2, wobei der Grundkörper (2) und der Deckel (3) aus dem gleichen Kunststoffmaterial gefertigt sind.

4. Kapsel nach Anspruch 3, wobei sowohl der Grundkörper (2) als auch der Deckel (3) aus Polypropylen gefertigt sind.

5. Kapsel nach einem der vorangehenden Ansprüche, wobei der Deckel von aussen nach innen einen Kragenbereich, der eine zur Deckelseite hin gewandte Fläche (8) bildet, einen gekrümmten Übergangsbereich und einen von einer Ebene der Fläche (8) abgesetzten flachen Bereich (9) aufweist.

6. Kapsel nach Anspruch 5, wobei der flache Bereich (9) mindestens 40% einer Deckelfläche einnimmt.

7. Kapsel nach einem der vorangehenden Ansprüche, die bis auf den Kragen (4) im Wesentlichen würfel- oder quaderförmig ist.

8. Kapsel nach einem der vorangehenden Ansprüche, wobei ein Ansatz (12) der Wölbung im Vergleich zu der Partie der Seitenwand (6), an welche der Kragen (4) anschliesst, nach innen versetzt ist.

9. Kapsel nach einem der vorangehenden Ansprüche, wobei der Deckel (3) mit einem Energierichtungsgeber versehen ist.

10. Kapsel nach einem der vorangehenden Ansprüche, wobei der Grundkörper durch die eingeleitete Brühflüssigkeit blähbar ist, derart, dass bei einer Brühflüssigkeitstemperatur von 95°C und einem Überdruck von 1 bar ein Kapseldurchmesser um mindestens 1 mm zunimmt, sofern einem solchen Aufblähen keine mechanischen Hindernisse entgegenstehen.

11. System zur Zubereitung eines Brüherzeugnisses, aufweisend eine Kapsel nach einem der vorangehenden Ansprüche sowie eine Maschine mit einem Brühmodul zum Bilden einer die Kapsel aufnehmenden Brühkammer, welches Brühmodul einen Injektor (105) zum Einleiten einer Brühflüssigkeit in die Kapsel und eine Ausleitvorrichtung (103) zum Ausleiten des Brüherzeugnisses aus der Kapsel aufweist, wobei die Ausleitvorrichtung mit einer auf die Wölbung abgestimmten Dichtfläche (132) versehen ist, gegen welche der Deckel (3) der in die Brühkammer eingelegten Kapsel (1) unter einem Druck der Brühflüssigkeit gedrückt wird.

12. System nach Anspruch 11, **dadurch gekennzeichnet, dass** es seitliche Führungsmitteln (131) zum Führen des Kragens (4) während eines Einwurfs der Kapsel in das Brühmodul aufweist.

13. System nach Anspruch 11 oder 12, wobei der Injektor (105) mindestens eine Kapseldichtung aufweist, die ein umlaufendes Dichtungsmerkmal besitzt, welches die umlaufende Seitenwand (6) der Kapsel während des Brühvorgangs nach innen drückt.

14. System nach einem der Ansprüche 11 bis 13, wobei eine Einwurföffnung (111) und die Führungsmittel (131) die Kapsel so positionieren, dass der Deckel (3) der eingelegten Kapsel auf Seite der Ausleitvorrichtung (103) liegt.
